(19) Europäisches Patentamt

European Patent Office

Office européen des brevets

(11) Publication number: **0 200 768 B1**

# EUROPEAN PATENT SPECIFICATION
## published in accordance with Art. 158(3) EPC

(45) Date of publication of patent specification: **15.05.91**   (51) Int. Cl.⁵: **G01N 1/20**

(21) Application number: **85905593.1**

(22) Date of filing: **01.11.85**

(86) International application number:
**PCT/AU85/00268**

(87) International publication number:
**WO 86/03001 (22.05.86 86/11)**

(54) **SAMPLE SPLITTER.**

(30) Priority: **07.11.84 AU 8021/84**

(43) Date of publication of application:
**12.11.86 Bulletin 86/46**

(45) Publication of the grant of the patent:
**15.05.91 Bulletin 91/20**

(84) Designated Contracting States:
**BE DE FR GB SE**

(56) References cited:
| | |
|---|---|
| **GB-A- 623 051** | **GB-A- 1 310 599** |
| **GB-A- 1 389 124** | **GB-A- 2 010 219** |
| **SU-A- 329 437** | **SU-A- 696 337** |
| **US-A- 3 186 233** | **US-A- 3 964 513** |
| **US-A- 4 170 900** | |

(73) Proprietor: **COUPE, Brian, Christopher**
**12 Kylie Way**
**Kingsley, W.A. 6026(AU)**

Proprietor: **LOOSEMORE, John, Colin**
**9 Macleod Street**
**Applecross, W.A. 6153(AU)**

(72) Inventor: **LOOSEMOORE, John Colin**
**9 MacLoad Street**
**Applecross, WA 6153(AU)**

(74) Representative: **MATTHEWS HADDAN & CO**
**BROOKES & MARTIN Incorporating MAT-**
**THEWS, HADDAN & CO. High Holborn House**
**52/54, High Holborn**
**London, WC1V 6SE(GB)**

## Description

This invention relates to a sample splitter for sampling from a quantity of material.

A sample splitter is disclosed in the patent specification of GB-A-1310599 which comprises a substantially cylindrical rotor chamber the central axis of which is substantially horizontal, and having at least one inlet, and at least two outlets, a rotor rotatably received in the rotor chamber for rotation about said horizontal axis.

GB-A-2010219 also discloses a sample splitter which comprises a rotary drum with a substantially horizontal axis, which is divided into a plurality of axial zones communicating with each other by means of a scoop provided on the end of a pipe which is fitted into the side wall of each compartment. The rotary drum has in addition, one inlet and two outlets.

Only one zone communicates with the inlet in one end wall of the drum and movement of the sample from one zone to the next, reduces the size of the sample. Splitting of a sample from the main body of material is carried out by substantial horizontal movement of the material.

According to the invention there is provided a sample splitter comprising a substantially cylindrical rotor chamber the central axis of which is substantially horizontal, and having at least one inlet, and at least two outlets, a rotor rotatably received in the rotor chamber for rotation about said horizontal axis, characterised by said rotor being sub-divided into at least two axially separate zones, wherein each zone periodically communicates with said inlet on rototation of the rotor, and each zone communicates with its associated single outlet each outlet being associated with only one zone.

Further according to the invention there are provided three outlets and three zones.

Still further according to the invention three outlets are associated with a chute assembly wherein the flow path from two outlets are each sub-divided into two flow paths of which, one flow path of each subdivided outlet flows to a chute associated with the respective outlet and the other flow path of each subdivided outlet flows to a common third chute and wherein the flow path from the remaining undivided outlet also flows to the third chute.

The zones maybe located in side-by-side relationship.

According to a preferred feature of the invention the inlet is located above the rotor.

According to a further preferred feature of the invention the outlets are located below the rotor.

According to a preferred feature of the invention said sets of pockets of each zone alternately communicate with the inlet.

According to a further preferred feature of the invention each zone is sub-divided into a set of pockets angularly disposed around the axis of rotation and wherein each of the pockets communicates with the inlet on rotation of the rotor.

The invention will be more full understood in the light of the following description of one specific embodiment. The description is made with reference to the accompanying drawings of which:

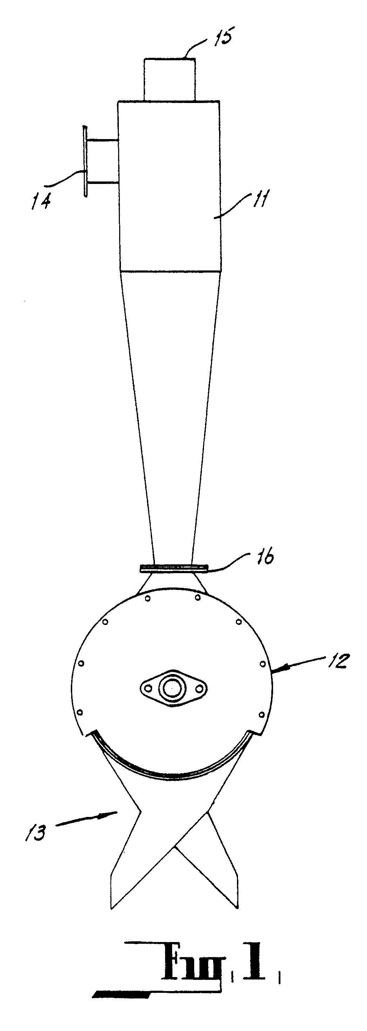

Figure 1 is an elevational view of the sample splitter of the embodiment;

Figures 2, 3 and 4 are sectional elevations of the sample splitter in its three different sampling modes, and

Figure 5 is a part sectional view of the delivery chutes of the embodiment.

The embodiment is directed towards a sample splitter for splitting substantial quantities of fluid solid particulate material and/or slurries such as borehole cuttings. The sample splitter is connected to a cyclone 11 which has an inlet 14 located towards the top thereof which receives the flow of air and/or liquid and entrained particulate material such as cuttings from a borehole. The top of the cyclone has an outlet 15 to permit air to escape. The cuttings fall to the bottom of the cyclone 11 and enter the sample splitter 12 at its inlet 16.

The sample splitter 12 comprises a substantially cylindrical rotor chamber 17 having its central axis substantially horizontal. The upper portion of the rotor chamber 17 is formed with an opening accommodating a chute which provides the inlet 16 of the splitter. The lower face of the rotor chamber is formed with an opening which extends the length of the chamber and provides for the outlets 23a, 23b and 23c from the rotor chamber.

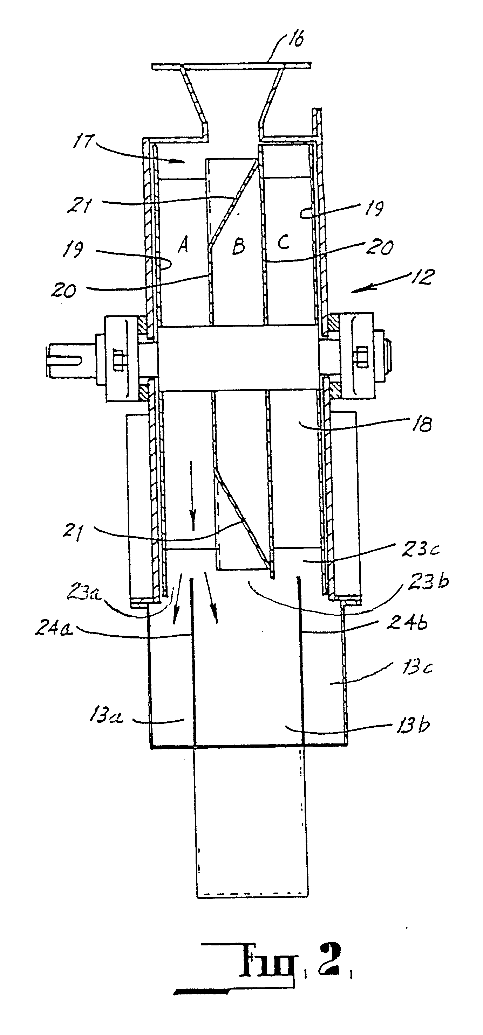

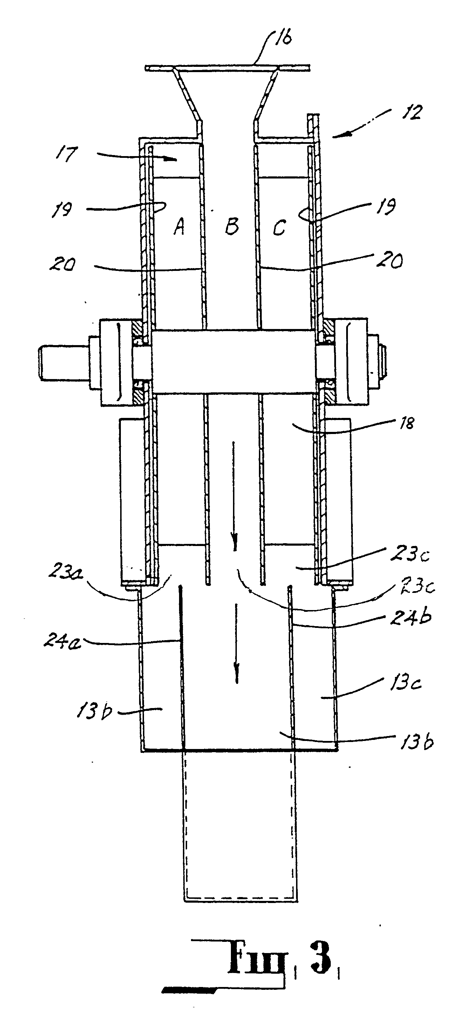

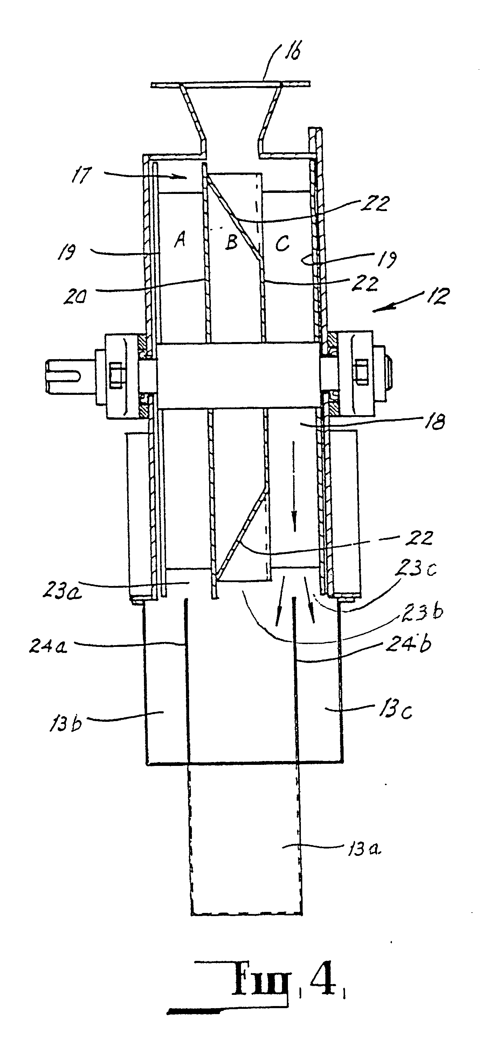

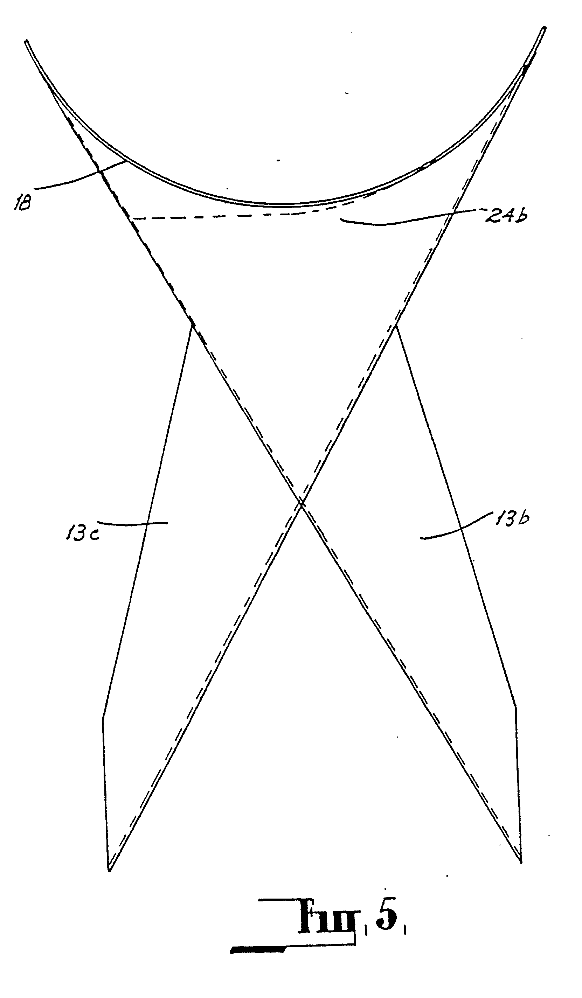

The outlets are associated with a chute assembly 13 which provides three axially disposed chutes 13a, 13b and 13c whereby the two side chutes 13a and 13c are radially offset from the central chute 13b as may be observed from Figure 5. The rotor chamber accommodates a substantially cylindrical rotor 18 mounted for rotation about the central axis of the rotor chamber 17. The rotor is defined into three axially disposed annular zones A, B and C which are defined by means of two end plates 19 and two intermediate plates 20. The central zone B is divided into a plurality of radially disposed pockets by means of a set of equally spaced radial plates extending between the intermediate separator plates 20. One half of the pockets are defined by the radial plates and the intermediate separator plates 20 such that when the pockets are located below the inlet 16, material flowing into the splitter from the inlet 16 is deposited into the central zone B as shown at figure 3. An additional one quarter of the pockets in the central zone B are formed with first oblique diverter plates 21 which close off the entry into the pocket and cause material flowing into the central zone B from the inlet 16 of the splitter to be diverted into one end zone A of the rotor as shown at figure 2. The remaining one quarter of the pockets in the central zone B of the rotor are formed with second obliquely located diverter plates 22 which are opposed to the first oblique diverter plates 21 and close off the pocket of the central zone B of the rotor and divert material flowing into central zone B from the inlet 16 of the splitter into the other end zone C located at the other side of the central zone B as shown at figure 4. Each of the end zones A and C are formed with pockets by means of radial plates which may if desired by located at corresponding positions to the radial plates forming the pockets in the central zone B. The divisions 24a and 24b between the side chutes 13a and 13c and the central chute 13b are located such that they lie substantially centrally across side outlets 23a and 23c which are below the rotation paths of the end zones A and C of the rotor.

In operation, as material is delivered to the sample splitter 12 from the cyclone 11 through the inlet 16, the rotor 18 is caused to rotate. As each of the open central pockets of the central zone B pass underneath the inlet 16, material is collected in the pockets of the central zone B and on further rotation of the rotor, this material is deposited from the central outlet 23b. As each of the pockets of the one end zone A which communicate with the central zone B (see figure 2) pass beneath the inlet 16, material is collected in those pockets and on further rotation of the rotor, that material is deposited from the respective side outlet 23a and is further sub-divided into two flow paths of substantially equal cross-sectional area, by the division 24a between the central chute 13b and the respective side chute 13a. As a result one half of the material from the pocket is delivered to the central chute 13b and the other half of the material from the pocket is delivered to the side chute 13a. Similarly, as the pockets of the other end zone C (see figure 4) which communicate with the central zone B of the rotor pass below the inlet 16, material from the inlet 16 is diverted into the pockets of the other end zone C and on further rotation of the rotor, the material is delivered from the respective side outlet 23c where the flow path is further subdivided by the subdivision 24b into two flow paths of substantially equal cross-sectional area between the central chute 13b and the side chute 13c. As a result one half of the material from the pocket flows to the central chute 13b and the other half of the material from a pocket flows to the side chute 13c.

As a result of the embodiment, a sample splitter is produced which separates a quantity of material flowing into the splitter into two samples of approximately 12½% of the total material and a further sample which comprises approximately 75% of the material. If desired the samples collected may be split further by dividing the flow paths further.

The embodiment provides a sample splitter which by virtue of the rotor 18 provides an air lock valve to prevent any air escaping from the cyclone 11 and passing through the splitter to upset any of the sampling procedures. Particulate material moving under gravity within the splitter has minimal velocity and therefor has no opportunity to segregate according to particle size or density.

If desired, the divisions 24a and 24b located below the two end zones A and C are shaped as shown at figure 5 such that their upper edge diverges away from the periphery of the rotor 18 with rotation of the rotor in order that any large particles which may be riding over the barriers do not become jammed between the barriers and the rotor. In addition if desired the unsplit material may be delivered to the rotor chamber through the end most zones A and C rather than the central zone.

If desired the zones need not be sub-divided into pockets and there may be a somewhat direct communication between the inlet and outlet. In such a case the rotor would not serve as a valve or air lock.

It should be appreciated that the scope of the present invention need not be limited to the particular scope of the embodiment described above. The invention may be used with any form of material which may be in a wet or dry form. In addition the material may be introduced into the splitter by any suitable means and need not be introduced direct from its source. Furthermore the relative volume of material delivered to each zone may vary as desired.

## Claims

1. A sample splitter comprising a substantially cylindrical rotor chamber (17) the central axis of which is substantially horizontal, and having at least one inlet (16), and at least two outlets (23a and 23c), a rotor (18) rotatably received in the rotor chamber (17) for rotation about a substantially horizontal axis, characterised by said rotor (18) being sub-divided into at least two axially separate zones (A and C), wherein each zone periodically communicates with said inlet (16) on rotation of the rotor, and each zone communicates with its associated single outlet, each outlet being associated with only one zone.

2. A sample splitter as claimed at claim 1 wherein there are three outlets (23a,23b,23c) and three zones (A, B & C).

3. A sample splitter as claimed at claim 2 wherein the outlets are associated with a chute assembly wherein the flow path from two outlets (23a and 23c) are each subdivided into two flow paths of which, one flow path of each subdivided outlet flows to a chute (13a and 13c) associated with the respective outlet and the other flow path of each outlet flows to a common third chute(13b) and wherein the flow path from the remaining undivided outlet (23b) also flows to the third chute (13b).

4. A sample splitter as claimed at claims 1, 2 or 2 wherein the zones (A, B and C) are located in side by side relationship.

5. A sample splitter as claimed at any one of the preceding claims, wherein each zone is subdivided into a set of pockets angularly disposed around the axis of rotation and wherein each of the pockets in turn communicates with the inlet (16) on rotation of the rotor (17).

6. A sample splitter as claimed at any one of the preceding claims wherein the inlet (16) is located above the rotor (18).

7. A sample splitter as claimed at any one of the preceding claims wherein the outlets are located below the rotor (18).

8. A sample splitter as claimed at claim 5 wherein said sets of pockets of each zone alternately communicate with the inlet.


**Revendications**

1. Séparateur d'échantillon comportant une chambre de rotor sensiblement cylindrique (17) dont l'axe central est sensiblement horizontal, et possédant au moins une entrée (16), et au moins deux sorties (23a et 23c), un rotor (18) reçu de manière rotative dans la chambre de rotor (17) pour pouvoir tourner autour d'un axe a peu près horizontal, caractérisé en ce que le rotor (18) est divisé en au moins deux zones séparées axialement (A et C), chaque zone communiquant de manière périodique avec l'entrée (16) lors de la rotation du rotor, et chaque zone communiquant avec sa seule sortie associée, chaque sortie étant associée avec une seule zone.

2. Séparateur d'échantillon selon la revendication 1, caractérisé en ce qu'il comporte trois sorties (23a, 23b, 23c) et trois zones (A, B et C).

3. Séparateur d'échantillon selon la revendication 2, caractérisé en ce que les sorties sont associées avec un ensemble formant goulotte, les trajets d'écoulement à partir de deux sorties (23a et 23c) étant chacun subdivisés en deux trajets d'écoulement, un trajet d'écoulement de chacun des écoulements sortant subdivisés jusqu'à une goulotte (13a et 13c) associée avec la sortie respective, et l'autre trajet d'écoulement de chacun des écoulements sortant subdivisés jusqu'à une troisième goulotte commune (13b) et dans lequel le trajet d'écoulement provenant de la sortie restante non divisée (23b) s'écoule également jusqu'à la troisième goulotte (13b).

4. Séparateur d'échantillon selon la revendication 1, 2 ou 3, caractérisé en ce que les zones (A, B et C) sont situées côte à côte.

5. Séparateur d'échantillon selon l'une quelconque des revendications précédentes, caractérisé. en ce que chaque zone est divisée en un ensemble de poches réparties angulairement autour de l'axe de rotation, chaque poche communiquant à son tour avec l'entrée (16) lors de la rotation du rotor (17).

6. Séparateur d'échantillon selon l'une quelconque des revendications précédentes, caractérisé en ce que l'entrée (16) est située au-dessus du rotor (18).

7. Séparateur d'échantillon selon l'une quelconque des revendications précédentes, caractérisé en ce que les sorties sont situées en-dessous du rotor (18).

8. Séparateur d'échantillon selon la revendication 5, caractérisé en ce que les ensembles de poches de chaque zone communiquent alternativement avec l'entrée.


**Ansprüche**

1. Probenteiler mit einer im wesentlichen zylindrischen Rotorkammer (17), deren zentrale Achse im wesentlichen horizontal verläuft und die wenigstens einen Einlaß (16) und wenigstens zwei Auslässe (23a und 23c) aufweist, und mit einem drehbar in der Rotorkammer (17) aufgenommenen und um eine im wesentlichen horizontale Achse rotierenden Rotor (18), **dadurch**

**gekennzichnet,** daß der Rotor (18) in wenigstens zwei axial getrennte Zonen (A und C) unterteilt ist, daß jede der Zonen bei Drehung des Rotors periodisch mit dem Einlaß (16) in Verbindung tritt, daß jede Zone mit ihrem zugeordneten einzigen Ausgang in Verbindung steht und daß jeder Auslaß lediglich einer Zone zugeordnet ist.

2. Probenteiler nach Anspruch 1, bei denen drei Auslässe (23a, 23b, 23c) und drei Zonen (A, B und C) vorhanden sind.

3. Probenteiler nach Anspruch 2, in dem den Auslässen eine Rinneneinrichtung zugeordnet ist, der Flußweg von zwei Auslässen (23a und 23c) jeweils in zwei Flußwege unterteilt ist, von denen ein Flußweg jedes unterteilten Auslasses zu einer dem entsprechenden Auslaß zugeordneten Rinne (13a und 13c) führt und der andere Flußweg jedes unterteilten Auslasses zu einer gemeinsamen dritten Rinne (13b) Führt, und in dem der Flußweg vom verbleibenden nicht unterteilten Auslaß (23b) ebenfalls zu der dritten Rinne (13b) führt.

4. Probenteiler noch Anspruch 1, 2 oder 3, in dem die Zonen (A. B und C) Seite an Seite zueinander angeordnet sind.

5. Probenteiler nach den vorhergehenden Ansprüchen, in dem jede Zone in einen Satz von winkelmäßig um die Rotationsachse angeordneten Taschen unterteilt ist und in dem jede der Taschen ihrerseits bei Drehung das Rotors (17) mit dem Einlaß (16) in Verbindung tritt.

6. Probenteiler nach den vorhergehenden Ansprüchen, in dem der Einlaß (16) oberhalb des Rotors (18) angeordnet ist.

7. Probenteiler nach den vorhergehenden Ansprüchen, in dem die Auslässe unterhalb des Rotors (18) angeordnet sind.

8. Probenteiler nach Anspruch 5, in dem die Sätze von Taschen jeder Zone abwechselnd mit dem Einlaß in Verbindung treten.

*Fig. 1*

Fig. 2

Fig. 3

Fig. 4

Fig. 5